# EUROPÄISCHE PATENTANMELDUNG

(11) **EP 3 418 040 A1**
(43) Veröffentlichungstag der Anmeldung: **26.12.2018**
(21) Anmeldenummer: 17177199.1
(22) Anmeldetag: 21.06.2017
(51) Int. Cl.: B29C 70/52, B29C 70/20, F03D 1/06, B29D 99/00, F03D 3/06, B29L 31/08, B29K 105/10

(54) **PULTRUDIERTES PROFIL MIT ABREISSGEWEBE**

(71) Anmelder: Nordex Energy GmbH, 22419 Hamburg (DE)
(72) Erfinder: Lipka, Thomas, 18055 Rostock (DE); Klein, Hendrik, 18147 Rostock (DE)
(74) Vertreter: Hauck Patentanwaltspartnerschaft mbB

(57) **Zusammenfassung**

Pultrusionsverfahren zur Herstellung eines pultrudierten Profils (10) insbesondere für ein Strukturbauteil eines Windenergieanlagenrotorblatts, wobei das Verfahren die folgenden Schritte aufweist:
• Bereitstellen eines Formwerkzeugs, das eine Durchgangsöffnung (32) aufweist,
• Einführen von Verstärkungsfasern in die Durchgangsöffnung (32),
• Einführen eines Abreißgewebes (20) in die Durchgangsöffnung (32),
• Einführen eines vorgefertigten Profils (40), das einen vorgegebenen Querschnitt und eine selbsttrennende Oberfläche aufweist, in die Durchgangsöffnung (32),
• Durchtränken der Verstärkungsfasern mit einem flüssigen Kunststoffmaterial (46),
• Ziehen der durchtränkten Verstärkungsfasern (38) mit dem Abreißgewebe (20) und dem vorgefertigten Profil (40) durch die Durchgangsöffnung (32) des Formwerkzeugs hindurch, wobei das Abreißgewebe (20) einen Hauptabschnitt (42), der an die mit dem flüssigen Kunststoffmaterial (46) durchtränkten Verstärkungsfasern (38) angrenzt, und einen Randabschnitt (44), der an dem vorgefertigten Profil (40) anliegt, aufweist,
• wobei das flüssige Kunststoffmaterial (46) beim Ziehen der durchtränkten Verstärkungsfasern (38) mit dem Abreißgewebe (20) und dem vorgefertigten Profil (40) durch die Durchgangsöffnung (32) hindurch zumindest teilweise aushärtet und aus den Verstärkungsfasern, dem Kunststoffmaterial und dem Abreißgewebe (20) das pultrudierte Profil (10) entsteht,
• Trennen des vorgefertigten Profils (40) von dem pultrudierten Profil (10).

## Beschreibung

Die Erfindung betrifft ein pultrudiertes Profil, das insbesondere für ein Strukturbauteil eines Windenergieanlagenrotorblatts verwendet werden kann. Das pultrudierte Profil kann auch für andere Anwendungsbereiche eingesetzt werden, zum Beispiel im Brückenbau. Strukturbauteile von Windenergieanlagenrotorblättern, beispielsweise Holme, Gurte, Stege oder Halbschalen werden seit langem überwiegend aus faserverstärkten Kunststoffmaterialien gefertigt. Hierzu können die Verstärkungsfasern beispielsweise in Form von Matten, Geweben oder Gelegen verarbeitet werden, die mit einem flüssigen Kunststoffmaterial durchtränkt werden. Dies kann z.B. im Handlaminierverfahren oder in einem Vakuuminfusionsverfahren geschehen. Ebenfalls bekannt ist die Verwendung vorimprägnierter Halbzeuge, sogenannter Prepregs, deren Verstärkungsfasern bereits vor dem Einlegen in eine Form mit dem flüssigen Kunststoffmaterial durchtränkt sind. Allen bislang genannten Verfahren ist gemeinsam, dass das flüssige Kunststoffmaterial in einer Herstellungsform für das Strukturbauteil aushärtet.

Seit einiger Zeit werden auch pultrudierte Profile für solche Strukturbauteile verwendet. Diese werden in einem sogenannten Pultrusionsverfahren aus Verstärkungsfasern und einem flüssigen Kunststoffmaterial hergestellt und erst nach dem Aushärten des in den Profilen enthaltenen Kunststoffmaterials in weiteren Herstellungsschritten zu dem Strukturbauteil weiterverarbeitet. In diesen weiteren Herstellungsschritten werden zumeist mehrere pultrudierte Profile miteinander verbunden, aber auch mit weiteren Materialien kombiniert. Beispielsweise können mehrere pultrudierte Profile gemeinsam mit weiteren Verstärkungsfasern in eine Herstellungsform eingelegt und in ein Kunststoffmaterial eingebettet werden, zum Beispiel in einem Vakuuminfusionsverfahren.

Pultrudierte Profile zeichnen sich durch eine gestreckte Anordnung der Verstärkungsfasern, einen hohen und präzise vorgebbaren Faservolumengehalt, exakt vorgebbare Querschnitte und eine theoretisch unbegrenzte Länge aus. Diese Eigenschaften können aus pultrudierten Profilen hergestellten Strukturbauteilen zugutekommen und diesen insbesondere eine besonders hohe Festigkeit bei geringem Gewicht verleihen.

Allerdings bringt die Verarbeitung der pultrudierten Profile zusätzliche Schwierigkeiten mit sich, die darin begründet sind, dass die relativ großformatigen, undurchlässigen, pultrudierten Profile miteinander verbunden werden müssen. Gegebenenfalls müssen sie auch mit weiteren, an eines der pultrudierten Profile angrenzenden Elementen des Strukturbauteils oder an das Strukturbauteil angrenzenden Elementen des Windenergieanlagenrotorblatts sicher/anforderungsgerecht verbunden werden müssen. Häufig geschieht dies in einem Vakuuminfusionsverfahren, in dem es darauf ankommt, alle zwischen den einzelnen Profilen bzw. Elementen vorhandenen Hohlräume vollständig mit dem infundierten flüssigen Kunststoffmaterial auszufüllen.

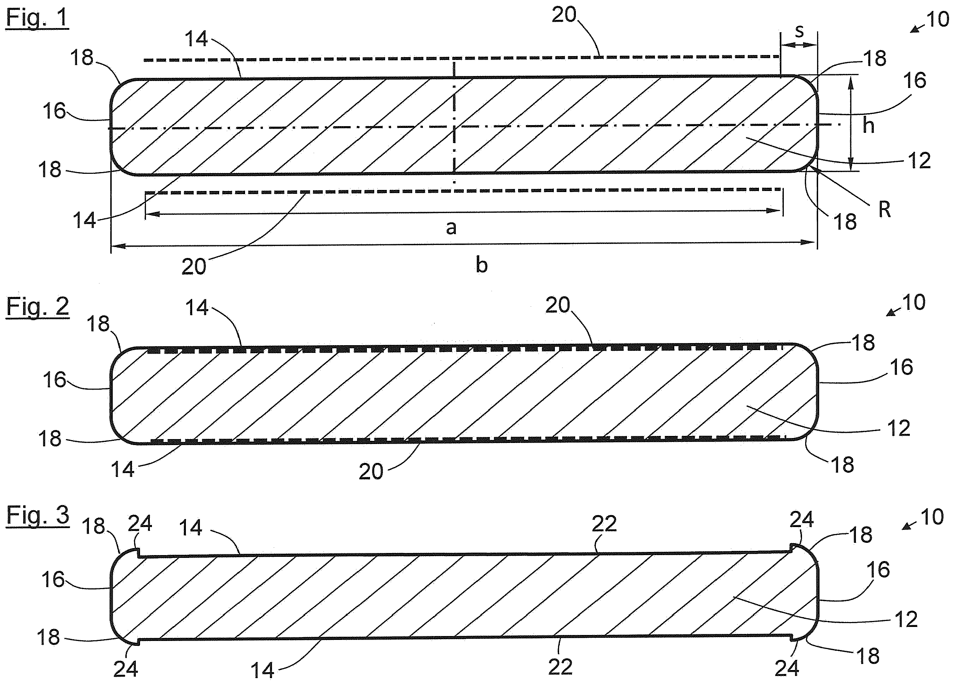

Die Herstellung und Verwendung pultrudierter Profile für ein Strukturbauteil eines Windenergieanlagenrotorblatts wird anhand der Figuren 1 bis 5 erläutert, die den Stand der Technik in schematischen, nicht maßstabsgerechten Querschnittsdarstellungen zeigen.

Figur 1 ist eine Explosionsdarstellung eines pultrudierten Profils 10 im Querschnitt. Die schraffierte Fläche zeigt den Querschnitt eines faserverstärkten Kunststoffmaterials 12 bzw. von mit einem flüssigen Kunststoffmaterial durchtränkten Verstärkungsfasern. Der Querschnitt weist zwei einander gegenüberliegende Flachseiten 14 mit einer Breite b und zwei einander gegenüberliegende Stirnseiten 16 mit einer Höhe h auf. In Längsrichtung des pultrudierten Profils 10 verlaufende Kanten sind zwischen jeweils einer der Flachseiten 14 und einer der Stirnseiten 16 angeordnet und weisen jeweils einen Übergangsbereich 18 mit einem Krümmungsradius R auf.

An den beiden Flachseiten 14 ist jeweils ein Streifen eines Abreißgewebes 20 angeordnet. Aus fertigungstechnischen Gründen weisen die beiden Streifen eine Breite a auf, die kleiner ist als die Breite b der Flachseiten 14, sodass zwischen den Rändern der Streifen und den angrenzenden Stirnseiten 16 in Breitenrichtung des pultrudierten Profils 10 jeweils ein Abstand s verbleibt.

Nach dem Ziehen des faserverstärkten Kunststoffmaterials 12 und des Abreißgewebes 20 durch ein Formwerkzeug einer Pultrusionsvorrichtung hindurch und nach dem Aushärten des flüssigen Kunststoffmaterials liegt das pultrudierte Profil 10 in der in der Figur 2 im Querschnitt gezeigten Form vor. Man erkennt, dass die Streifen des Abreißgewebes 20 an den beiden Flachseiten 14 des pultrudierten Profils 10 an der Oberfläche des faserverstärkten Kunststoffmaterials angeordnet und gemeinsam mit den Verstärkungsfasern in das Kunststoffmaterial eingebettet sind. Das pultrudierte Profil 10 mit dem eingebetteten Abreißgewebe 20 stellt ein fertiges Halbzeug dar, das vor der weiteren Verarbeitung in der in Fig. 2 veranschaulichten Form gelagert werden kann.

In der Regel erst unmittelbar vor der weiteren Verarbeitung wird das Abreißgewebe 20 entfernt, wobei unterhalb des Abreißgewebes 20 eine "aktivierte" Oberfläche entsteht, die insbesondere für eine nachfolgende Verklebung günstige Eigenschaften aufweist. Nach dem Entfernen des Abreißgewebes 20 weist das pultrudierte Profil 10 den in der Figur 3 gezeigten Querschnitt auf, in dem an den beiden Flachseiten 14 Vertiefungen 22 ausgebildet sind. Diese Vertiefungen 22 werden zu beiden Seiten begrenzt von Stegen 24, deren Breite im Wesentlichen dem Abstand s entspricht und die trotz ihrer geringen Höhe von in der Regel z. B. weniger als 0,1 mm Schwierigkeiten bei der weiteren Verarbeitung der pultrudierten Profile 10 verursachen.

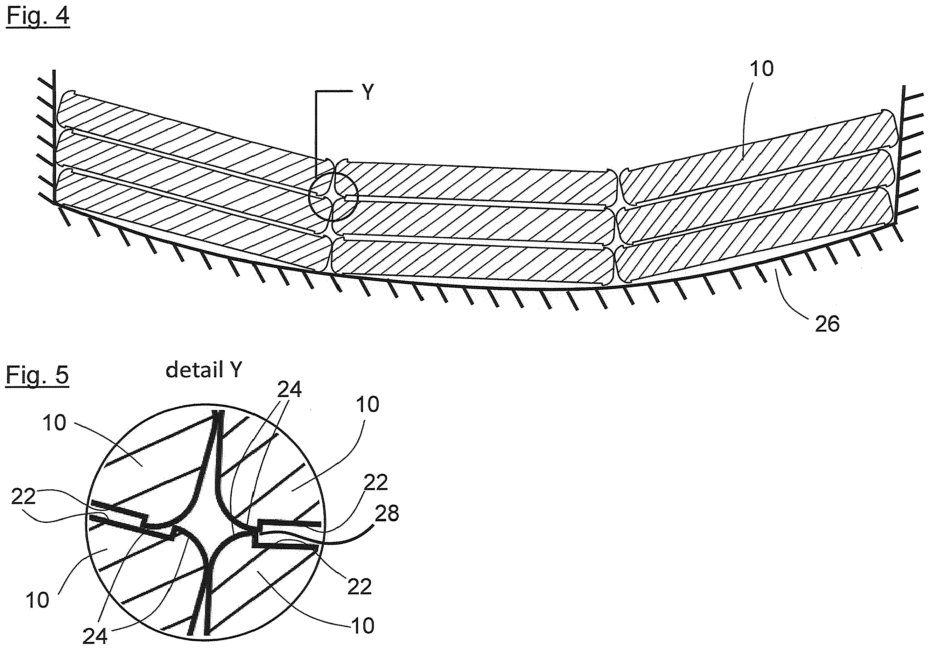

Fig. 4 veranschaulicht diese Schwierigkeiten am Beispiel der Herstellung eines Gurts für ein Windenergieanlagenrotorblatt in einer Herstellungsform 26. Beispielhaft dargestellt sind neun der pultrudierten Profile 10 aus Figur 3, die nach dem Entfernen des Abreißgewebes 20 in die Herstellungsform 26 eingelegt worden sind. Wegen der Krümmung der Herstellungsform 26 grenzen die pultrudierten Profile 10 unter unterschiedlichen Winkeln aneinander an. Die in Figur 5 dargestellte Ausschnittsvergrößerung des in der Figur 4 mit Y gekennzeichneten Bereichs zeigt, dass beispielsweise an der mit 28 bezeichneten Stelle zwei der Stege 24 derart aneinandergrenzen, dass ein Einströmen eines flüssigen Kunststoffmaterials in die Herstellungsform 26, insbesondere in einem Vakuuminfusionsverfahren, behindert wird. Um diese Schwierigkeiten zu vermeiden, sind aus dem Stand der Technik unterschiedliche Ansätze bekannt geworden.

Aus der Druckschrift WO 2014/079456 A1 sind pultrudierte Profile bekannt geworden, deren Materialstärke in seitlichen Randbereichen in Richtung zu den Stirnseiten des Profils hin abnimmt. An den Flachseiten angeordnete Abreißgewebe erstrecken sich bis in diese Randbereiche hinein, sodass nach dem Entfernen der Abreißgewebe stehenbleibende Stege in Bereichen mit geringerer Materialstärke angeordnet sind und nicht über die Flachseiten überstehen. Bei übereinandergestapelten Profilen sollen die Stege den Harzfluss darum nicht beeinträchtigen.

Aus der Druckschrift DE 10 2015 007 289 A1 ist ein Verfahren zur Herstellung eines Rotorblattgurts aus pultrudierten Profilen bekannt geworden. Nach dem Entfernen von Abreißgeweben von den Flachseiten der Profile verbleiben seitliche Stege, die in einem Nachbearbeitungsschritt entfernt werden sollen. Dazu werden die seitlichen Stege entweder abgeschliffen oder -gefräst, oder es werden an beiden Seiten des Profils Streifen abgetrennt, die jeweils zwei der Stege aufweisen. Durch die Nachbearbeitung soll das Profil in beiden Fällen einen rechteckigen Querschnitt mit für die weitere Verarbeitung günstigen Oberflächeneigenschaften erhalten. Die Nachbearbeitung ist jedoch aufwendig und ein Teil des Fasermaterials geht verloren.

Davon ausgehend ist es die Aufgabe der Erfindung, ein Pultrusionsverfahren zur Herstellung pultrudierter Profile zur Verfügung zu stellen, die besonders einfach und kostengünstig weiterverarbeitet werden können, insbesondere zu Strukturbauteilen von Windenergieanlagenrotorblättern, sowie ein solches pultrudiertes Profil.

Diese Aufgabe wird gelöst durch das Pultrusionsverfahren mit den Merkmalen des Anspruchs 1. Vorteilhafte Ausgestaltungen sind in den sich anschließenden Unteransprüchen angegeben.

Das Pultrusionsverfahren dient zur Herstellung eines pultrudierten Profils insbesondere für ein Strukturbauteil eines Windenergieanlagenrotorblatts und weist die folgenden Schritte auf:
- Bereitstellen eines Formwerkzeugs, das eine Durchgangsöffnung aufweist,
- Einführen von Verstärkungsfasern in die Durchgangsöffnung,
- Einführen eines Abreißgewebes in die Durchgangsöffnung,
- Einführen eines vorgefertigten Profils, das einen vorgegebenen Querschnitt und eine selbsttrennende Oberfläche aufweist, in die Durchgangsöffnung,
- Durchtränken der Verstärkungsfasern mit einem flüssigen Kunststoffmaterial,
- Ziehen der durchtränkten Verstärkungsfasern mit dem Abreißgewebe und dem vorgefertigten Profil durch die Durchgangsöffnung des Formwerkzeugs hindurch, wobei das Abreißgewebe einen Hauptabschnitt, der an die durchtränkten Verstärkungsfasern angrenzt, und einen Randabschnitt, der an dem vorgefertigten Profil anliegt, aufweist,
- wobei das flüssige Kunststoffmaterial beim Ziehen der durchtränkten Verstärkungsfasern mit dem Abreißgewebe und dem vorgefertigten Profil durch die Durchgangsöffnung hindurch zumindest teilweise aushärtet und aus den Verstärkungsfasern, dem Kunststoffmaterial und dem Abreißgewebe das pultrudierte Profil entsteht,
- Trennen des vorgefertigten Profils von dem pultrudierten Profil.

Das Strukturbauteil kann beispielsweise ein Gurt, ein Steg, ein Holm, eine Halbschale oder ein Teil einer Halbschale eines Windenergieanlagenrotorblatts sein.

Die Verstärkungsfasern können beispielsweise Glas-, Kohlenstoff- oder Aramidfasern sein. Das flüssige Kunststoffmaterial kann beispielsweise ein Polyester- oder Epoxidharz aufweisen.

Das Formwerkzeug ist Teil einer Pultrusionsvorrichtung und weist eine Durchgangsöffnung auf, deren Öffnungsquerschnitt den Querschnitt des pultrudierten Profils bestimmt.

Das pultrudierte Profil kann eine sehr große Länge von beispielsweise 10 m oder mehr, 50 m oder mehr oder 100 m oder mehr aufweisen. Es kann als Endlosmaterial mit praktisch unbegrenzter Länge hergestellt und beispielsweise auf einer Rolle gelagert werden. Der Querschnitt des faserverstärkten Kunststoffmaterials weist sehr viel geringere Abmessungen auf als die Länge des pultrudierten Profils. Die Verstärkungsfasern sind in der Längsrichtung des pultrudierten Profils ausgerichtet.

Das Abreißgewebe kann beispielsweise ein Gewebe aus Polyesterfasern sein. Es können jedoch auch andere Fasermaterialien und/oder Textilmaterialien mit einer anderen Faserstruktur als ein Gewebe eingesetzt werden. Der Begriff "Abreißgewebe" schließt sämtliche, nach der Pultrusion durch Abreißen von der Oberfläche des faserverstärkten Kunststoffmaterials zu entfernende, flächige Materialien ein.

Das vorgefertigte Profil hat einen vorgegebenen Querschnitt, d.h. eine feste Querschnittsgeometrie, die es bereits vor der Ausführung des Pultrusionsverfahrens aufweist und die es während der Ausführung des Pultrusionsverfahrens im Wesentlichen beibehält. Gegebenenfalls können beim Ziehen durch die Durchgangsöffnung des Formwerkzeugs hindurch gewisse, insbesondere elastische Verformungen des vorgefertigten Profils auftreten. Der Querschnitt des vorgefertigten Profils ist so auf einen Öffnungsquerschnitt der Durchgangsöffnung abgestimmt, dass der verbleibende Teil des Öffnungsquerschnitts einem gewünschten Querschnitt des pultrudierten Profils entspricht. Es versteht sich, dass auch mehrere vorgefertigte Profile und/oder mehrere Abreißgewebe eingesetzt werden können, die an unterschiedlichen Positionen innerhalb des Öffnungsquerschnitts der Durchgangsöffnung angeordnet werden.

Das vorgefertigte Profil hat eine selbsttrennende Oberfläche. Damit ist gemeint, dass das vorgefertigte Profil nach dem Durchlaufen der Durchgangsöffnung und dem zumindest teilweisen Aushärten des flüssigen Kunststoffmaterials aufgrund seiner Oberflächeneigenschaften wieder von dem pultrudierten Profil getrennt werden kann, ohne das pultrudierte Profil zu beschädigen. Im Idealfall bleibt dabei auch das vorgefertigte Profil unbeschädigt, sodass es mehrfach verwendet werden kann. Für das Trennen kann ein gewisser Krafteinsatz erforderlich sein, falls das vorgefertigte Profil trotz seiner selbstrennenden Oberfläche an dem pultrudierten Profil haftet.

Das Abreißgewebe hat einen Hauptabschnitt, der an die mit dem flüssigen Kunststoffmaterial durchtränkten Verstärkungsfasern angrenzt. Dieser Hauptabschnitt bildet eine äußere Fläche des pultrudierten Profils, sodass beim Abreißen des Abreißgewebes die angrenzende Oberfläche des faserverstärkten Kunststoffmaterials in diesem Bereich aktiviert wird und für die weitere Verarbeitung des pultrudierten Profils optimale Oberflächeneigenschaften erhält. Außerdem hat das Abreißgewebe einen Randabschnitt, der beim Ziehen der genannten Komponenten durch die Durchgangsöffnung hindurch an dem vorgefertigten Profil anliegt. Nach dem Trennen des vorgefertigten Profils von dem pultrudierten Profil liegt dieser Randabschnitt frei. Insbesondere kann er von dem faserverstärkten Kunststoffmaterial des pultrudierten Profils vorstehen.

Durch die Verwendung des vorgefertigten Profils in Verbindung mit dem Abreißgewebe werden zwei wichtige Vorteile erzielt. Zum einen kann das Abreißgewebe besonders einfach und rückstandsfrei entfernt werden, weil es an dem freien Randabschnitt einfach erfasst werden kann und keine Gefahr dahingehend besteht, dass im Randbereich des Abreißgewebes einzelne Fasern oder ähnliches am pultrudierten Profil hängen bleiben.

Zum anderen bleiben, anders als zum Stand der Technik im Zusammenhang mit der Figur 5 erläutert, nach dem Entfernen des Abreißgewebes keine Stege, Stufen oder Vertiefungen in der Oberfläche des faserverstärkten Kunststoffmaterials zurück, weil sich der Hauptabschnitt des Abreißgewebes bis an den Rand des vorgefertigten Profils heran erstreckt. An der Stelle, an der beim Ziehen der genannten Komponenten durch die Durchgangsöffnung das vorgefertigte Profil an die durchtränkten Verstärkungsfasern angrenzt, entsteht beim Entfernen des vorgefertigten Profils vielmehr eine saubere Kante. Die aktivierte Oberfläche des faserverstärkten Kunststoffmaterials erstreckt sich nach dem Abreißen des Abreißgewebes bis an diese Kante heran.

In einer Ausgestaltung weist die Durchgangsöffnung einen Umfang auf, an dem das Abreißgewebe beim Ziehen der durchtränkten Verstärkungsfasern mit dem Abreißgewebe und dem vorgefertigten Profil durch die Durchgangsöffnung hindurch entlanggeführt wird, wobei der Randabschnitt zwischen dem Umfang und dem vorgefertigten Profil angeordnet ist. Ein an dem Umfang gelegener Punkt, an dem das vorgefertigte Profil an die durchtränkten Verstärkungsfasern angrenzt, bildet somit die Grenze zwischen dem Hauptabschnitt und dem Randabschnitt des Abreißgewebes. Nach dem Hindurchführen der genannten Komponenten durch die Durchgangsöffnung hindurch und dem Abtrennen des vorgefertigten Profils liegt der Randabschnitt völlig frei.

In einer Ausgestaltung weist die Durchgangsöffnung einen im Wesentlichen rechteckigen Querschnitt mit zwei einander gegenüberliegenden Flachseiten und zwei einander gegenüberliegenden Stirnseiten auf, wobei das vorgefertigte Profil beim Ziehen der durchtränkten Verstärkungsfasern mit dem Abreißgewebe und dem vorgefertigten Profil durch die Durchgangsöffnung hindurch an einer der Stirnseiten entlanggeführt wird. Eine Höhe des vorgefertigten Profils kann dabei insbesondere einer Höhe der Stirnseite entsprechen, sodass ein an die Stirnseite angrenzender Teilquerschnitt der Durchgangsöffnung von dem vorgefertigten Profil ausgefüllt wird. Der Hauptabschnitt des Abreißgewebes kann sich insbesondere über diejenige Breite einer der Flachseiten erstrecken, die von den durchtränkten Verstärkungsfasern eingenommen wird. Je nach vorgesehenem Einsatzzweck können die Abmessungen des rechteckigen Querschnitts in einem relativ großen Bereich liegen. Typische Höhen der Stirnseiten liegen im Bereich von etwa 5 mm bis etwa 20 mm, typische Breiten der Flachseiten im Bereich von etwa 20 mm bis etwa 400 mm. Es sind jedoch auch kleinere und größere Abmessungen möglich. Ebenfalls möglich sind Abweichungen von einem rechteckigen Querschnitt, insbesondere eine konkave oder konvexe Ausbildung einer oder beider Flachseiten und/oder einer oder beider Stirnseiten.

In einer Ausgestaltung weist der Randabschnitt beim Ziehen der durchtränkten Verstärkungsfasern mit dem Abreißgewebe und dem vorgefertigten Profil durch die Durchgangsöffnung hindurch einen Abstand von der Stirnseite, entlang der das vorgefertigte Profil entlanggeführt wird, auf. Dieser Abstand ist kleiner als die Breite des vorgefertigten Profils. Dadurch werden Schwierigkeiten bei der Führung des Abreißgewebes während der Pultrusion vermieden, die dadurch entstehen können, dass das Abreißgewebe an die Stirnseite der Durchgangsöffnung anstößt. Durch Anpassen der Breite des vorgefertigten Profils an die bei der Führung des Abreißgewebes auftretenden Toleranzen wird eine vollständige Abdeckung des faserverstärkten Kunststoffmaterials durch den Hauptabschnitt des Abreißgewebes und ein für das einfache Entfernen hinreichend breiter Randabschnitt des Abreißgewebes erreicht.

In einer Ausgestaltung wird das Abreißgewebe beim Ziehen der durchtränkten Verstärkungsfasern mit dem Abreißgewebe und dem vorgefertigten Profil durch die Durchgangsöffnung hindurch an einer der Flachseiten entlanggeführt und der Randabschnitt erstreckt sich entlang dieser Flachseite bis über das vorgefertigte Profil. Haupt- und Randabschnitt des Abreißgewebes liegen demnach im Wesentlichen in einer Ebene, was die Anordnung des Abreißgewebes vereinfachen kann.

In einer Ausgestaltung bildet das vorgefertigte Profil einen Ring, der beim Ziehen der durchtränkten Verstärkungsfasern mit dem Abreißgewebe und dem vorgefertigten Profil durch die Durchgangsöffnung hindurch kontinuierlich umläuft. Grundsätzlich kann das vorgefertigte Profil auch als "Endlosmaterial", z.B. in großer Länge von einer Rolle, verwendet und nach dem Durchlaufen der Durchgangsöffnung verworfen oder für eine weitere Verwendung aufbewahrt und/oder aufbereitet werden. Die Ausführung als Ring vermeidet diese zusätzlichen Schritte, indem das vorgefertigte Profil nach dem Durchlaufen der Durchgangsöffnung automatisch wieder zurückgeführt wird.

In einer Ausgestaltung besteht das vorgefertigte Profil aus einem Material, das der Oberfläche des vorgefertigten Profils seine selbsttrennenden Eigenschaften verleiht, insbesondere aus PTFE oder PVC. Aus PTFE (Polytetrafluorethylen) und PVC (Polyvinylchlorid) können für das Pultrusionsverfahren hinsichtlich ihrer Oberflächen- und Festigkeitseigenschaften geeignete Profile mit beliebigen Querschnitten besonders einfach vorgefertigt werden.

In einer Ausgestaltung weist das vorgefertigte Profil einen Kern aus einem Kernmaterial und einen Mantel aus einem Material auf, das der Oberfläche des vorgefertigten Profils seine selbsttrennenden Eigenschaften verleiht, insbesondere aus PTFE oder PVC. Durch eine solche Kern-/Mantelkonstruktion kann dem vorgefertigten Profil insbesondere eine besonders hohe Zugfestigkeit verliehen werden, was für das Pultrusionsverfahren von Vorteil ist. Der Mantel kann in Form einer Beschichtung auf das Kernmaterial aufgebracht werden.

In einer Ausgestaltung ist das Kernmaterial ein faserverstärktes Kunststoffmaterial. Als Verstärkungsfasern eignen sich zum Beispiel dieselben Fasertypen, die vorstehend für die in das pultrudierte Profil einzubettenden Verstärkungsfasern genannt wurden. So kann ein guter Kompromiss zwischen den mechanischen Eigenschaften und den Kosten des vorgefertigten Profils gefunden werden. Zudem ist eine Abstimmung auf z.B. die Zugfestigkeit der Verstärkungsfasern des pultrudierten Profils möglich, was für das Ziehen sämtlicher Komponenten durch die Durchgangsöffnung günstig ist.

In einer Ausgestaltung wird das vorgefertigte Profil vor dem Einführen in die Durchgangsöffnung mit einer Trennschicht versehen, die der Oberfläche des vorgefertigten Profils seine selbsttrennenden Eigenschaften verleiht. Ein solches "Eintrennen" kann beispielsweise mit Wachs oder mit einem Folientrennmittel erfolgen, das einen dünnen, transparenten Trennfilm auf der Oberfläche entstehen lässt.

Die oben genannte Aufgabe wird ebenfalls gelöst durch das pultrudierte Profil mit den Merkmalen des Anspruchs 11. Vorteilhafte Ausgestaltungen sind in den sich anschließenden Unteransprüchen angegeben.

Das pultrudierte Profil ist insbesondere für ein Strukturbauteil eines Windenergieanlagenrotorblatts vorgesehen. Es kann insbesondere mit einem vorstehend erläuterten Pultrusionsverfahren hergestellt werden. Das pultrudierte Profil weist ein faserverstärktes Kunststoffmaterial mit einem Umfang und ein Abreißgewebe auf, das einen Hauptabschnitt, der sich über einen Abschnitt des Umfangs erstreckt, und einen freien Randabschnitt, der über den Abschnitt des Umfangs übersteht, aufweist. Die vorstehenden Erläuterungen der Merkmale und Vorteile des Pultrusionsverfahrens gelten für das pultrudierte Profil entsprechend. Insbesondere kann das Abreißgewebe mithilfe des Randabschnitts besonders einfach und rückstandsfrei entfernt werden. Anschließend weist das faserverstärkte Kunststoffmaterial dort, wo der Hauptabschnitt des Abreißgewebes angeordnet war, eine aktivierte Oberfläche auf, die frei von Stufen und/oder Vertiefungen ist und die bis an eine Kante des pultrudierten Profils heranreichen kann.

In einer Ausgestaltung ist der Umfang von zwei einander gegenüberliegenden Flachseiten und zwei einander gegenüberliegenden Stirnseiten eines im Wesentlichen rechteckigen Querschnitts des faserverstärkten Kunststoffmaterials gebildet, wobei sich der Hauptabschnitt des Abreißgewebes über eine der Flachseiten erstreckt und das Abreißgewebe zwei freie Randabschnitte aufweist, die jeweils über ein Ende dieser Flachseite überstehen.

In einer Ausgestaltung erstreckt sich ein weiteres Abreißgewebe mit einem weiteren Hauptabschnitt über die andere der beiden Flachseiten und weist zwei weitere freie Randabschnitte auf, die jeweils über ein Ende der anderen Flachseite überstehen. Ein solches pultrudiertes Profil ist für die weitere Verarbeitung besonders vorteilhaft. Nachfolgend wird die Erfindung anhand eines in Figuren dargestellten Ausführungsbeispiels näher erläutert. Es zeigen:
- Fig. 1: ein pultrudiertes Profil in einer Explosionsdarstellung,
- Fig. 2: ein pultrudiertes Profil mit zwei Streifen eines Abreißgewebes,
- Fig. 3: das pultrudierte Profil aus Figur 2 nach dem Entfernen des Abreißgewebes,
- Fig. 4: eine Anordnung mehrerer pultrudierter Profile in einer Herstellungsform für ein Strukturbauteil,
- Fig. 5: eine Ausschnittsvergrößerung aus Fig. 4,
- Fig. 6: ein pultrudiertes Profil mit zwei Abreißgeweben und zwei vorgefertigten Profilen, angeordnet in einer Durchgangsöffnung eines Formwerkzeugs, in einer Explosionsdarstellung,
- Fig. 7: das pultrudierte Profil aus Figur 6 nach dem Durchlaufen des Formwerkzeugs und dem Entfernen der vorgefertigten Profile.

Die Figuren 1 bis 5 zeigen den Stand der Technik. Die Figuren 1 bis 7 zeigen schematische, nicht maßstabsgerechte Querschnittsdarstellungen.

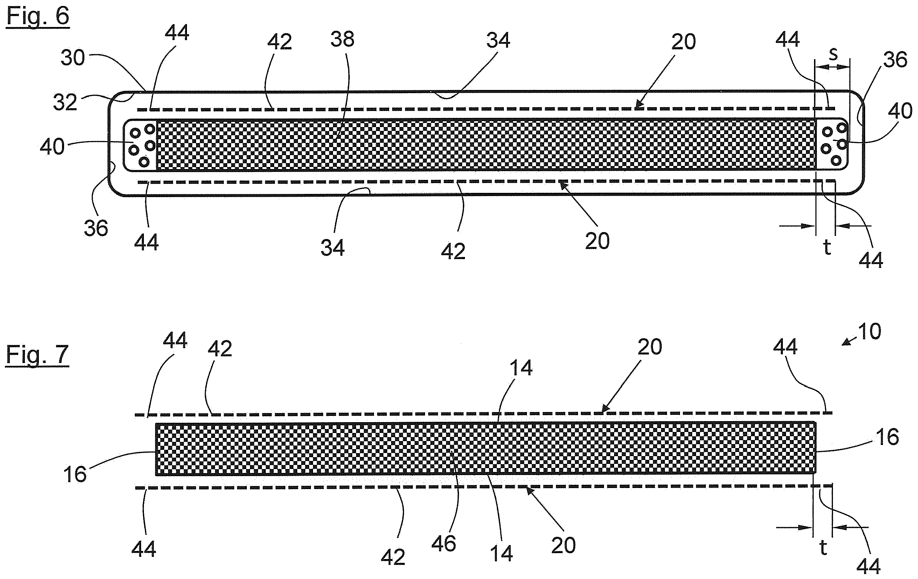

In der Figur 6 ist ein Formwerkzeug 30 mit einer Durchgangsöffnung 32 schematisch dargestellt. Die Durchgangsöffnung 32 hat einen Umfang, der von zwei einander gegenüberliegenden Flachseiten 34 und zwei einander gegenüberliegenden Stirnseiten 36 gebildet ist. Übergangsbereiche zwischen den Flach- und Stirnseiten 34, 36 sind leicht abgerundet.

Bei dem Pultrusionsverfahren werden die folgenden Komponenten durch die Durchgangsöffnung 32 hindurchgezogen: mit einem flüssigen Kunststoffmaterial durchtränkte Verstärkungsfasern 38, zwei vorgefertigte Profile 40 und zwei Streifen Abreißgewebe 20. Die durchtränkten Verstärkungsfasern 38 werden beim Durchlaufen der Durchgangsöffnung 32 zu einem faserverstärkten Kunststoffmaterial geformt, dessen rechteckiger Querschnitt in der Figur 6 bereits zu erkennen ist.

Die beiden vorgefertigten Profile 40 werden jeweils an einer der Stirnseiten 36 der Durchgangsöffnung 32 entlanggeführt. Die beiden Streifen Abreißgewebe 20 werden jeweils an eine der Flachseiten 34 entlanggeführt. Sie erstrecken sich jeweils mit einem Hauptabschnitt 42 über die gesamte Breite der durchtränkten Verstärkungsfasern 38 und weisen an beiden Seiten daran angrenzend jeweils einen Randabschnitt 44 auf. Die beiden vorgefertigten Profile weisen jeweils eine Breite s auf. Eine Breite t der Randabschnitte 44 ist kleiner als diese Breite s der vorgefertigten Profile 40.

Figur 6 ist insoweit schematisch bzw. eine Art Explosionsdarstellung, als die innerhalb der Durchgangsöffnung 32 dargestellten Komponenten diese Durchgangsöffnung 32 nicht vollständig ausfüllen. Tatsächlich ist dies der Fall und die Streifen Abreißgewebe 20 grenzen einerseits unmittelbar an die Flachseiten 34 der Durchgangsöffnung 32 und andererseits unmittelbar an die durchtränkten Verstärkungsfasern 38 bzw. die vorgefertigten Profile 40 an.

Figur 7 zeigt ein pultrudiertes Profil 10, das entsprechend dem anhand der Figur 6 erläuterten Pultrusionsverfahren hergestellt worden ist. Es umfasst ein faserverstärktes Kunststoffmaterial 46, das einen im Wesentlichen rechteckigen Querschnitt mit zwei einander gegenüberliegenden Flachseiten 14 und zwei einander gegenüberliegenden Stirnseiten 16 aufweist. Weiterhin umfasst das pultrudierte Profil 10 zwei Streifen Abreißgewebe 20, die jeweils einen Hauptabschnitt 42 und zwei daran angrenzende Randabschnitte 44 aufweisen. Man erkennt, dass jeder der Hauptabschnitte 42 einen Abschnitt des Umfangs des faserverstärkten Kunststoffmaterials 38, nämlich eine gesamte Flachseite 14, abdeckt, während die Randabschnitte 44 frei sind und über diesen Abschnitt des Umfangs überstehen.

### Liste der verwendeten Bezugszeichen

- 10: pultrudiertes Profil
- 12: faserverstärktes Kunststoffmaterial
- 14: Flachseite
- 16: Stirnseite
- 18: Übergangsbereich
- 20: Abreißgewebe
- 22: Vertiefung
- 24: Steg
- 26: Herstellungsform
- 28: Stelle
- 30: Formwerkzeug
- 32: Durchgangsöffnung
- 34: Flachseite der Durchgangsöffnung
- 36: Stirnseite der Durchgangsöffnung
- 38: durchtränkte Verstärkungsfasern
- 40: vorgefertigtes Profil
- 42: Hauptabschnitt
- 44: Randabschnitt
- 46: faserverstärktes Kunststoffmaterial
- a: Breite (des Abreißgewebes)
- b: Breite (des pultrudierten Profils)
- h: Höhe (des pultrudierten Profils)
- s: Breite (des vorgefertigten Profils)
- t: Breite (des Randabschnitts)

## Patentansprüche

1. Pultrusionsverfahren zur Herstellung eines pultrudierten Profils (10) insbesondere für ein Strukturbauteil eines Windenergieanlagenrotorblatts, wobei das Verfahren die folgenden Schritte aufweist:
• Bereitstellen eines Formwerkzeugs, das eine Durchgangsöffnung (32) aufweist,
• Einführen von Verstärkungsfasern in die Durchgangsöffnung (32),
• Einführen eines Abreißgewebes (20) in die Durchgangsöffnung (32),
• Einführen eines vorgefertigten Profils (40), das einen vorgegebenen Querschnitt und eine selbsttrennende Oberfläche aufweist, in die Durchgangsöffnung (32),
• Durchtränken der Verstärkungsfasern mit einem flüssigen Kunststoffmaterial,
• Ziehen der durchtränkten Verstärkungsfasern (38) mit dem Abreißgewebe (20) und dem vorgefertigten Profil (40) durch die Durchgangsöffnung (32) des Formwerkzeugs hindurch, wobei das Abreißgewebe (20) einen Hauptabschnitt (42), der an die durchtränkten Verstärkungsfasern (38) angrenzt, und einen Randabschnitt (44), der an dem vorgefertigten Profil (40) anliegt, aufweist,
• wobei das flüssige Kunststoffmaterial beim Ziehen der durchtränkten Verstärkungsfasern (38) mit dem Abreißgewebe (20) und dem vorgefertigten Profil (40) durch die Durchgangsöffnung (32) hindurch zumindest teilweise aushärtet und aus den Verstärkungsfasern, dem Kunststoffmaterial und dem Abreißgewebe (20) das pultrudierte Profil (10) entsteht,
• Trennen des vorgefertigten Profils (40) von dem pultrudierten Profil (10).

2. Pultrusionsverfahren nach Anspruch 1, **dadurch gekennzeichnet, dass** die Durchgangsöffnung (32) einen Umfang aufweist, an dem das Abreißgewebe (20) beim Ziehen der durchtränkten Verstärkungsfasern (38) mit dem Abreißgewebe (20) und dem vorgefertigten Profil (40) durch die Durchgangsöffnung (32) hindurch entlanggeführt wird, wobei der Randabschnitt (44) zwischen dem Umfang und dem vorgefertigten Profil (40) angeordnet ist.

3. Pultrusionsverfahren nach Anspruch 1 oder 2, **dadurch gekennzeichnet, dass** die Durchgangsöffnung (32) einen im Wesentlichen rechteckigen Querschnitt mit zwei einander gegenüberliegenden Flachseiten (34) und zwei einander gegenüberliegenden Stirnseiten (36) aufweist, wobei das vorgefertigte Profil (40) beim Ziehen der durchtränkten Verstärkungsfasern (38) mit dem Abreißgewebe (20) und dem vorgefertigten Profil (40) durch die Durchgangsöffnung (32) hindurch an einer der Stirnseiten (36) entlanggeführt wird.

4. Pultrusionsverfahren nach Anspruch 3, **dadurch gekennzeichnet, dass** der Randabschnitt (44) beim Ziehen der durchtränkten Verstärkungsfasern mit dem Abreißgewebe (20) und dem vorgefertigten Profil (40) durch die Durchgangsöffnung (32) hindurch einen Abstand von der Stirnseite (36), an der das vorgefertigte Profil (40) entlanggeführt wird, aufweist.

5. Pultrusionsverfahren nach Anspruch 3 oder 4, **dadurch gekennzeichnet, dass** das Abreißgewebe (20) beim Ziehen der durchtränkten Verstärkungsfasern (38) mit dem Abreißgewebe (20) und dem vorgefertigten Profil (40) durch die Durchgangsöffnung (32) hindurch an einer der Flachseiten (36) entlanggeführt wird und sich der Randabschnitt (44) entlang dieser Flachseite (36) bis über das vorgefertigte Profil (44) erstreckt.

6. Pultrusionsverfahren nach einem der Ansprüche 1 bis 5, **dadurch gekennzeichnet, dass** das vorgefertigte Profil (40) einen Ring bildet, der beim Ziehen der durchtränkten Verstärkungsfasern (38) mit dem Abreißgewebe (20) und dem vorgefertigten Profil (40) durch die Durchgangsöffnung (32) hindurch kontinuierlich umläuft.

7. Pultrusionsverfahren nach einem der Ansprüche 1 bis 6, **dadurch gekennzeichnet, dass** das vorgefertigte Profil (40) aus einem Material besteht, das der Oberfläche des vorgefertigten Profils (40) seine selbsttrennenden Eigenschaften verleiht, insbesondere aus PTFE oder PVC.

8. Pultrusionsverfahren nach einem der Ansprüche 1 bis 6, **dadurch gekennzeichnet, dass** das vorgefertigte Profil (44) einen Kern aus einem Kernmaterial und einen Mantel aus einem Material aufweist, das der Oberfläche des vorgefertigten Profils seine selbsttrennenden Eigenschaften verleiht, insbesondere aus PTFE oder PVC.

9. Pultrusionsverfahren nach Anspruch 8, **dadurch gekennzeichnet, dass** das Kernmaterial ein faserverstärktes Kunststoffmaterial ist.

10. Pultrusionsverfahren nach einem der Ansprüche 1 bis 9, **dadurch gekennzeichnet, dass** das vorgefertigte Profil (40) vor dem Einführen in die Durchgangsöffnung (32) mit einer Trennschicht versehen wird, die der Oberfläche des vorgefertigten Profils (40) seine selbsttrennenden Eigenschaften verleiht.

11. Pultrudiertes Profil (10) insbesondere für ein Strukturbauteil eines Windenergieanlagenrotorblatts, insbesondere hergestellt mit einem Pultrusionsverfahren nach einem der Ansprüche 1 bis 10, wobei das pultrudierte Profil (10) ein faserverstärktes Kunststoffmaterial (46) mit einem Umfang und ein Abreißgewebe (20) aufweist, das einen Hauptabschnitt (42), der sich über einen Abschnitt des Umfangs erstreckt, und einen freien Randabschnitt (44), der über den Abschnitt des Umfangs übersteht, aufweist.

12. Pultrudiertes Profil (10) nach Anspruch 11, **dadurch gekennzeichnet, dass** der Umfang von zwei einander gegenüberliegenden Flachseiten (14) und zwei einander gegenüberliegenden Stirnseiten (16) eines im Wesentlichen rechteckigen Querschnitts des faserverstärkten Kunststoffmaterials (46) gebildet ist, wobei sich der Hauptabschnitt (42) des Abreißgewebes (20) über eine der Flachseiten (14) erstreckt und das Abreißgewebe (20) zwei freie Randabschnitte (44) aufweist, die jeweils über ein Ende dieser Flachseite (14) überstehen,

13. Pultrudiertes Profil (10) nach Anspruch 12, **dadurch gekennzeichnet, dass** sich ein weiteres Abreißgewebe (20) mit einem Hauptabschnitt (42) über die andere der beiden Flachseiten (14) erstreckt und zwei weitere freie Randabschnitte (44) aufweist, die jeweils über ein Ende der anderen Flachseite (14) überstehen.
